# EUROPÄISCHE PATENTANMELDUNG

(11) **EP 2 823 996 A1**
(43) Veröffentlichungstag der Anmeldung: **14.01.2015**
(21) Anmeldenummer: 14166309.6
(22) Anmeldetag: 29.04.2014
(51) Int. Cl.: B60Q 1/00

(54) **Landwirtschaftliches Fahrzeug**

(30) Priorität: 09.07.2013 DE 102013107219
(71) Anmelder: CLAAS Tractor SAS, 78141 Velizy-Villacoublay (FR)
(72) Erfinder: Pontinha, Daniel, 78260 Achères (FR)

(57) **Zusammenfassung**

Ein landwirtschaftliches Fahrzeug mit einer Beleuchtungseinrichtung (2), die eine Lichtquelle (3), die innerhalb eines Reflektors (4) angeordnet ist, um zumindest einen Teil des von der Lichtquelle (3) erzeugten Lichts gerichtet an eine Umgebung (5) des Fahrzeugs (1) abstrahlen zu können, und ein lichtdurchlässiges Element (6) zum Schutz der Lichtquelle (3) und des Reflektors (4) gegenüber der Umgebung (5) umfasst, zeichnet sich aus durch eine weitere der Beleuchtungseinrichtung (2) zugeordnete Leuchtmittelanordnung (7), die unabhängig von der Lichtquelle (3) schaltbar ist.

## Beschreibung

Die Erfindung betrifft ein landwirtschaftliches Fahrzeug gemäß dem Oberbegriff des Anspruchs 1.

Landwirtschaftliche Fahrzeuge wie insbesondere Traktoren oder selbstfahrende Erntemaschinen werden zu unterschiedlichen Zwecken auf dem Feld, auf Feldwegen, auf öffentlichen Straßen, auf Betriebshöfen und dergleichen eingesetzt. Mit den Fahrzeugen werden dann zumeist landwirtschaftliche Arbeitsverfahren (z.B. Bodenbearbeitung, Saat, Düngen, Ernte) und/oder Transportarbeiten durchgeführt (Transport von Anbaugeräten, Anhängern, des Fahrzeugs selbst von einem Einsatzort zum nächsten). Zahlreiche weitere Einsatzzwecke für landwirtschaftliche Fahrzeuge sind bekannt.

Insbesondere zur Vermeidung von betriebsbedingten Unfällen, d.h. aus Sicherheitsgründen, ist es wichtig, dass landwirtschaftliche Fahrzeuge in den unterschiedlichen zuvor genannten Einsatzsituationen einfach und sicher erkennbar sind. Denn aus verschiedenen Gründen können die Fahrzeuge schnell eine Gefahr für im Umfeld des Fahrzeugs befindliche Personen und/oder Sachgüter, allgemein für andere Verkehrsteilnehmer werden. Dies liegt beispielsweise an der oftmals besonderen Fahrzeuggröße und -masse, an der Ausstattung mit möglicherweise überdimensionierten und/oder scharfkantigen Arbeitsgeräten, an der im Straßenverkehr verhältnismäßig geringen Fahrgeschwindigkeit, an der eingeschränkten Übersichtlichkeit usw.. Aus den zuvor genannten Gründen und ganz allgemein schon wegen der üblicherweise gewünschten Einsatzmöglichkeit landwirtschaftlicher Fahrzeuge auf öffentlichen Straßen müssen landwirtschaftliche Fahrzeuge in vielen Ländern bestimmte Zulassungsvorschriften, in Deutschland etwa die der StVZO erfüllen. Diese Zulassungsvorschriften regeln unter anderem die Beleuchtung des Fahrzeugs.

Es ist absehbar, dass für landwirtschaftliche Fahrzeuge auch bei Tageslicht ein Betrieb mit eingeschalteter Beleuchtung vorgeschrieben sein wird. Bislang kann dazu beispielsweise das sogenannte Abblendlicht genutzt werden, das bei Traktoren zumeist durch eine frontseitig an der Motorhaube angeordnete Beleuchtungseinrichtung bereitgestellt wird. Diese weist eine Lichtquelle auf, die innerhalb eines Reflektors angeordnet ist. Zum Schutz der Lichtquelle und des Reflektors vor Außeneinflüssen (Feuchtigkeit, Schmutz, Fremdkörper) dient ein lichtdurchlässiges Element, welches die Beleuchtungseinrichtung nach außen hin abschließt. Mit einer derartigen Beleuchtungseinrichtung lässt sich von der Lichtquelle erzeugtes Licht gerichtet an die vordere Umgebung des Fahrzeugs abstrahlen. Das sogenannte "Abblendlicht" ist damit eigentlich zur Ausleuchtung der Umgebung bei Dunkelheit geeignet, um also einem (im Fahrzeug sitzenden) Bediener des Fahrzeugs die dunkle (z.B. nächtliche) Umgebung zu beleuchten. Wird das Abblendlicht bei Tageslichtbedingungen genutzt, sorgt die für die nächtliche Ausleuchtung der Umgebung optimierte Lichtverteilung dafür, dass ein Großteil des Lichts auf den Untergrund (Feldboden, Straße etc.) vor dem Fahrzeug gelenkt wird, wo es ungenutzt absorbiert wird. Der übrige Teil des verhältnismäßig leistungsstarken Abblendlichts kann leicht andere Verkehrsteilnehmer blenden, zumal es sich hierbei um gerichtetes Licht handelt.

Da die Wirkung des Abblendlichts tagsüber für den Bediener des Fahrzeugs selbst praktisch nicht wahrnehmbar ist und sogar ein nachteiliges Blenden anderer Verkehrsteilnehmer hervorgerufen werden kann, verursacht ein Fahrzeugbetrieb mit eingeschaltetem Abblendlicht einen unnötig hohen Energieverbrauch. Dieser äußert sich beispielsweise in erhöhtem Kraftstoffverbrauch. Zudem führt der Betrieb des Abblendlichts bei Tag zu einem frühen Verschleiß der verwendeten Glühlampen. Neben erhöhtem Zeit- und Kostenaufwand für den Austausch defekter Glühlampen besteht während deren Nichtfunktion ein Sicherheitsrisiko.

Aus dem Bereich von Traktoren ist es daneben bekannt, diese mit separaten Lampen auszustatten, die ein für die Tagfahrt geeignetes Licht abstrahlen. Derartige Lampen sind etwa im Zubehörhandel als Nachrüstsatz erhältlich, weisen jedoch den Nachteil auf, dass zusätzlicher Bauraum und eine geeignete Anbringungsmöglichkeit erforderlich ist. Zudem fällt ein zusätzlicher Aufwand für die Montage einschließlich Verkabelung an.

Daneben ist es von elektrisch betriebenen Flurförderfahrzeugen wie Gabelstaplern bekannt, diese mit in der Außenkontur des Gabelstaplers angeordneten Positionssicherheitsleuchten auszustatten, die als Leuchteinheiten ausschließlich Leuchtdioden (LED) aufweisen. Hierzu sei beispielhaft auf die EP 2 272 715 A1 verwiesen.

Es ist eine Aufgabe der vorliegenden Erfindung, ein landwirtschaftliches Fahrzeug anzugeben, das sich bei verhältnismäßig geringem konstruktiven Aufwand auf sichere und kostengünstige Weise bei Tag und bei Nacht betreiben lässt.

Die genannte Aufgabe wird gelöst durch ein landwirtschaftliches Fahrzeug gemäß den Merkmalen des Anspruchs 1. Dieses zeichnet sich aus durch eine weitere der Beleuchtungseinrichtung zugeordnete Leuchtmittelanordnung, die unabhängig von der Lichtquelle schaltbar ist. Die Beleuchtungseinrichtung verfügt damit über eine zusätzliche Möglichkeit, Licht an die Umgebung des Fahrzeugs abzugeben, wobei diese Möglichkeit erfindungsgemäß grundsätzlich unabhängig vom Schaltzustand der Lichtquelle der Beleuchtungseinrichtung besteht. Bei der weiteren Leuchtmittelanordnung kann es sich um jedwede Einrichtung handeln, die zur Außenbeleuchtung des Fahrzeugs dient. Bevorzugt ist die Leuchtmittelanordnung dabei in die Beleuchtungseinrichtung integriert. Erfindungsgemäß ergibt sich der Vorteil, dass mit verhältnismäßig geringem konstruktiven Aufwand die Möglichkeit einer zusätzlichen Beleuchtung geschaffen ist. Durch geeignetes Schalten von Lichtquelle und/oder Leuchtmittelanordnung lässt sich das Fahrzeug unter verschiedenen Bedingungen, insbesondere bei Nacht und Tag sicher betreiben. Bei entsprechender Auslegung von Lichtquelle und Leuchtmittelanordnung ist ein besonders energieeffizienter Betrieb möglich.

Zweckmäßigerweise ist dabei die Leuchtmittelanordnung zur ungerichteten Abgabe von Licht an die Umgebung des Fahrzeugs ausgebildet. Der Leuchtmittelanordnung ist demnach - im Unterschied zur Lichtquelle - keine Einrichtung zur Ausrichtung des erzeugten Lichts zugeordnet. Eine somit fehlende Lichtbündelung sorgt vorteilhaft dafür, dass das abgestrahlte Licht von außenstehenden Beobachtern des Fahrzeugs nicht als blendend wahrgenommen wird.

Die Beleuchtungseinrichtung kann grundsätzlich an verschiedenen Einbauorten am Fahrzeug angeordnet sein. Vorzugsweise ist die Beleuchtungseinrichtung frontseitig des Fahrzeugs angeordnet. Dabei kann die Leuchtmittelanordnung insbesondere zur Beleuchtung und/oder Sichtbarmachung des Fahrzeugs für entgegenkommende Verkehrsteilnehmer unter Tageslichtbedingungen im Sinne eines sogenannten "Tagfahrlichts" dienen. Bei Tagfahrlicht handelt es sich insbesondere um eine Fahrzeugbeleuchtung, die für Fahrten bei guten Sichtverhältnissen tagsüber eingesetzt werden darf. Das zweckmäßigerweise dabei ungerichtet abgestrahlte Licht kann vorteilhafterweise eine deutlich geringere Leuchtleistung aufweisen als beispielsweise nächtlich eingesetztes Abblendlicht. Somit entsteht bei ausschließlichem Betrieb mit Tagfahrlicht nur ein geringer Stromverbrauch.

Die erfindungsgemäß vorgesehene weitere Leuchtmittelanordnung kann grundsätzlich unterschiedlichen Beleuchtungseinrichtungen zugeordnet sein. Gemäß einer vorteilhaften Weiterbildung erfüllt die Lichtquelle der Beleuchtungseinrichtung die Funktion eines Abblendlichts und/oder Fernlichts und/oder Arbeitslichts und/oder Standlichts des Fahrzeugs. Zur Erzielung einer dazu erforderlichen gerichteten Lichtabstrahlung kann dabei der der Lichtquelle zugeordnete Reflektor die Form eines Hohlspiegels, insbesondere eines Parabolspiegels aufweisen. Die Lichtquelle ist dann zweckmäßigerweise in einem Brennpunkt - oder zumindest in der Nähe des Brennpunkts - des Reflektors angeordnet.

Eine konstruktiv günstige Möglichkeit für eine Integration der weiteren Leuchtmittelanordnung kann darin bestehen, dass die Leuchtmittelanordnung an einem Ringelement angeordnet ist, das bezogen auf einen Strahlengang des von der Lichtquelle erzeugbaren Lichts etwa koaxial dazu positioniert ist. Das Ringelement umgibt dabei den Strahlengang des von der Lichtquelle - beispielsweise Abblendlicht, Fernlicht, Arbeitslicht, Standlicht - abgestrahlten Lichts, wodurch eine besonders platzsparende Anordnung zweier unabhängig voneinander schaltbarer Beleuchtungen geschaffen ist.

Die Leuchtmittelanordnung kann auf verschiedene Weise gestaltet sein und insbesondere auf technisch unterschiedliche Weise Licht erzeugen. Gemäß einer bevorzugten Ausführungsmöglichkeit umfasst die Leuchtmittelanordnung eine Vielzahl von Einzelleuchtmitteln, insbesondere Leuchtdioden. Diese können insbesondere an dem Ringelement mit gleichem Abstand zueinander angeordnet sein, so dass für einen die Beleuchtungseinrichtung aus einer relativen Ferne beobachtenden Betrachter aus der Gesamtheit der Einzelleuchtmittel der Eindruck einer linienförmigen Struktur, insbesondere eines geschlossenen Rings entsteht. Die Verwendung von Leuchtdioden bietet den Vorteil, dass diese einen geringen Energieverbrauch bei zugleich hoher Lebensdauer aufweisen. Zum Erzielen der optischen Wirkung einer linienförmigen Struktur, insbesondere eines geschlossenen Rings, könnte der Vielzahl von Leuchtdioden weiterhin ein gemeinsamer Diffusor zugeordnet sein, der durch Lichtstreuung die Vielzahl der Einzelleuchtmittel als ein gesamtes, z.B. linienförmiges Leuchtmittel erscheinen lässt. Alternativ oder ergänzend kann die Leuchtmittelanordnung einen länglichen Lichtleiter umfassen, der so geformt, insbesondere gekrümmt ist, dass für einen die Beleuchtungseinrichtung aus einer relativen Ferne beobachtenden Betrachter aus der Form des länglichen Lichtleiters der Eindruck einer linienförmigen Struktur, insbesondere eines geschlossenen Rings entsteht.

Gemäß einer aus konstruktiver Sicht bevorzugten Weiterbildung handelt es sich bei dem Ringelement um eine an der Karosserie des Fahrzeugs, insbesondere an einer Motorhaube, befestigbare Aufnahmeeinrichtung, welche zur Aufnahme einer Baugruppe der Beleuchtungseinrichtung und/oder zur Aufnahme von einzelnen Komponenten der Beleuchtungseinrichtung dient. Dem Ringelement kommt somit eine tragende Funktion zu, indem dieses dazu dient, eine Baugruppe der Beleuchtungseinrichtung und/oder Komponenten der Baugruppe gegenüber der Karosserie des Fahrzeugs zu befestigen. Das Ringelement kann dazu beispielsweise im Sinne eines Ringeinsatzes gestaltet sein, der einerseits an der Karosserie befestigbar ist, und in den andererseits die Baugruppe und/oder Komponenten der Baugruppe eingesetzt werden können. Bei bevorzugter Anordnung der Leuchtmittelanordnung an dem Ringelement kommt diesem somit eine doppelte Funktion zu, nämlich eine Befestigungsfunktion für die Baugruppe bzw. für einzelne Komponenten der Beleuchtungseinrichtung und eine Beleuchtungsfunktion für das Fahrzeug. Vorhandener Bauraum wird damit auf konstruktiv einfache Weise in hohem Maße ausgenutzt.

Vorteilhaft sind die Lichtquelle, der Reflektor und das lichtdurchlässige Element Teil einer Baugruppe der Beleuchtungseinrichtung. Das heißt, dass diese so miteinander zu einer Einheit verbindbar sind, dass sich die gebildete Baugruppe als Ganze montieren lässt. Die Montage erfolgt dabei bevorzugt am Ringelement, das bereits an der Karosserie, insbesondere der Motorhaube des Fahrzeugs montiert ist. Eine einfache Montage ist möglich, wenn sich die Baugruppe beispielsweise entlang einer (fiktiven) zentralen Achse des Strahlengangs in das Ringelement fügen lässt. Ein nachträglicher Austausch der Baugruppe lässt sich so mit relativ geringem Aufwand durchführen.

Zweckmäßigerweise ist die Beleuchtungseinrichtung mit Mitteln versehen, um die Baugruppe mit dem Ringelement insbesondere lösbar zu verbinden. Derartige Mittel können beispielsweise mehrere an Umfangsbereichen der Baugruppe angeordnete Befestigungselemente umfassen. Ein bevorzugte Ausführungsform sieht vor, dass an dem Ringelement mehrere Ausnehmungen vorgesehen sind, die zu den Befestigungselementen der Baugruppe korrespondierend angeordnet und komplementär dazu ausgebildet sind, um mit diesen eine Verbindung zwischen Ringelement und Baugruppe herstellen zu können.

Die Erfindung wird im Folgenden anhand von Figuren näher erläutert. Daraus ergeben sich auch weitere vorteilhafte Effekte und Wirkungen. In den Figuren zeigt:
- Fig. 1: einen Traktor in schematischer Ansicht von vorn,
- Fig. 2: eine Beleuchtungseinrichtung in schematischer Ansicht von der Seite in eingebautem Zustand an ein Fahrzeugkarosserieelement,
- Fig. 3: eine Beleuchtungseinrichtung in perspektivischer Explosionsdarstellung,
- Fig. 4: eine Beleuchtungseinrichtung in Ansicht von vorn in eingebautem Zustand an ein Fahrzeugkarosserieelement.

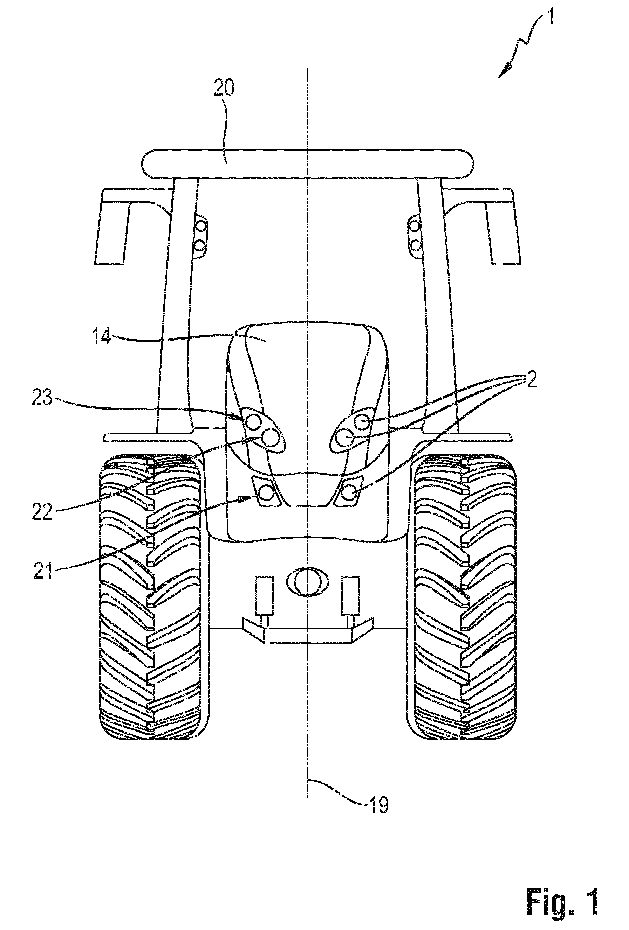

Fig. 1 zeigt ein landwirtschaftliches Fahrzeug in Form eines Traktors 1 in schematischer Ansicht von vorn. Auf für sich bekannte Weise weist der Traktor 1 eine Fahrerkabine 20 und eine Motorhaube 14 auf. Die Motorhaube 14 erstreckt sich bezogen auf eine bevorzugte Vorwärtsfahrtrichtung des Traktors 1 von einem unteren Bereich der Fahrerkabine 20 nach vorn, d.h. aus der Zeichnungsebene der Fig. 1 hinaus.

Frontseitig an der Motorhaube 14 sind insgesamt sechs Beleuchtungseinrichtungen 2 angeordnet. Die Anordnung der Beleuchtungseinrichtungen 2 ist bezogen auf eine fiktive Symmetrieebene 19 symmetrisch. Damit werden drei jeweils auf gleicher Höhe angeordnete Paare von Beleuchtungseinrichtungen 2 gebildet, welche insbesondere die Funktionalität von Standlicht 21, Abblend- und Fernlicht 22 und Arbeitslicht 23 erfüllen.

Bei dem erfindungsgemäßen Traktor 1 weisen zumindest die beiden unteren Paare der Beleuchtungseinrichtungen 2, denen die Funktionalität Standlicht 21 sowie Abblend- und Fernlicht 22 zukommt, eine zusätzliche Funktionalität auf. Insbesondere ist diesen Beleuchtungseinrichtungen 2 nämlich eine weitere noch zu erläuternde Leuchtmittelanordnung zugeordnet, die unabhängig von der Lichtquelle der jeweiligen Beleuchtungseinrichtung schaltbar ist.

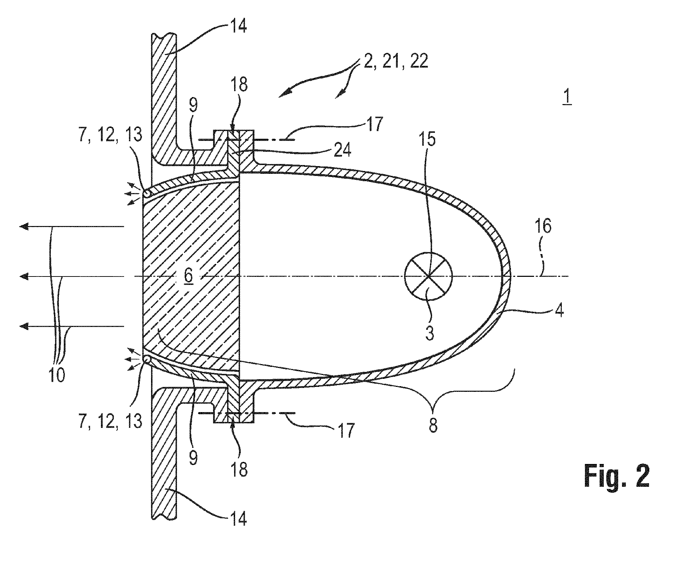

Dazu sei nun auf Fig. 2 verwiesen, welche beispielhaft eine Beleuchtungseinrichtung 2 in schematisch vereinfachter Ansicht im Schnitt von der Seite zeigt. Es handelt sich dabei um beispielsweise eine Beleuchtungseinrichtung 2, die an einem wie in Fig. 1 gezeigten Traktor 1 zur Erfüllung der Funktionalität des Standlichts 21 oder des Abblend- und Fernlichts 22 dient. Die in Fig. 2 dargestellte Beleuchtungseinrichtung 2 ist im eingebauten Zustand (vereinfacht) gezeigt, das heißt in einem Zustand, in dem diese an einem Karosserieteil, hier der Motorhaube 14 eines Traktors 1, befestigt ist.

Die Beleuchtungseinrichtung 2 umfasst dazu einerseits eine Baugruppe 8, die eine Lichtquelle 3, einen Reflektor 4 und ein lichtdurchlässiges Element 6 umfasst. Bei der Lichtquelle 3 kann es sich beispielsweise um eine elektrische Glühlampe (z.B. Halogenlampe) handeln. Bei dem Reflektor 4 handelt es sich um einen Hohlspiegelkörper, der beispielsweise die Form eines Parabolspiegels aufweist und der insbesondere eine Licht reflektierende Innenoberfläche aufweist, so dass mittels der Lichtquelle 3 und dem zugehörigen Reflektor 4 gerichtetes Licht erzeugbar ist. Die Lichtquelle 3 ist zu diesem Zweck auf einer (fiktiven) zentralen Achse 16 der Beleuchtungseinrichtung 2, insbesondere in einem Brennpunkt 15 des Reflektors 4 angeordnet. Von der Lichtquelle 3 erzeugtes, auf den Reflektor 4 auftreffendes Licht wird somit von dem Reflektor 4 so gelenkt, dass es die Beleuchtungseinrichtung 2 durch das lichtdurchlässige Element 6 als Strahlengang 10 in Richtung einer Umgebung 5 des Fahrzeugs 1 verlässt. Die Anordnung und Ausbildung von Lichtquelle 3 und Reflektor 4 können von der dargestellten Weise abweichen. Bei dem lichtdurchlässigen Element 6 handelt es sich beispielsweise um ein aus transparentem Kunststoff oder Glas gefertigtes Bauteil, das insbesondere zum Schutz der Lichtquelle 3 und des Reflektors 4 vor Verschmutzung, Feuchtigkeit oder allgemein vor eindringenden Fremdkörpern aus der Umgebung 5 dient. Der Baugruppe 8 können weitere nicht dargestellte optische Elemente wie beispielsweise Linsen, Prismen, Spiegel, Blenden, Diffusoren oder dergleichen zugeordnet sein, um von der Lichtquelle 3 erzeugtes Licht in besonderer Weise aus der Beleuchtungseinrichtung 2 austreten zu lassen (beispielsweise gestreut, gebündelt, in besonderem Abstrahlwinkel etc.).

Die Beleuchtungseinrichtung 2 umfasst neben der Baugruppe 8 weiterhin ein Ringelement 9. Das Ringelement 9 weist eine das lichtdurchlässige Element 6 umfangsmäßig umschließende Form auf und ist koaxial zu diesem angeordnet. Es schützt damit das lichtdurchlässige Element 6 zumindest teilweise vor Fremdkörpereinwirkung und verhindert zudem einen seitlichen Lichtaustritt aus dem lichtdurchlässigen Element 6. Bezogen auf die zentrale Achse 16 weist das Ringelement 9 einen nach außen (in Richtung Umgebung 5) leicht abnehmenden Innendurchmesser auf. In einem innen liegenden Bereich maximalen Innendurchmessers weist das Ringelement 9 eine Abkantung 24 auf, die sich bezogen auf die zentrale Achse 16 in einer radialen Ebene nach außen erstreckt. Das Ringelement 9 ist im Bereich der Abkantung 24 über Befestigungsmittel an der Motorhaube 14 befestigt. Dazu sind im Bereich der Abkantung 24 in Fig. 2 nicht zu sehende Bohrungen 11 ausgebildet, mit denen sich das Ringelement 9 mittels Schrauben an der Motorhaube 14 verschrauben lässt.

In einem nach außen (Umgebung 5) weisenden Bereich mit minimalen Innendurchmesser ist an dem Ringelement 9 eine Leuchtmittelanordnung 7 angeordnet. Diese Leuchtmittelanordnung 7 kann beispielsweise eine Vielzahl von Leuchtdioden 12 und/oder einen länglichen Lichtleiter 13 umfassen und dient zur ungerichteten Abgabe von Licht an die Umgebung des Traktors 1. Der Zustand der Leuchtmittelanordnung 7 ist dabei grundsätzlich unabhängig von der Lichtquelle 3, so dass sich die Leuchtmittelanordnung 7 insbesondere auch bei ausgeschalteter Lichtquelle 3 einschalten lässt, um den Traktor 1 bei Tageslicht im Sinne eines Tagfahrlichts zu beleuchten und diesen damit für andere Verkehrsteilnehmer bei Tageslicht besser sichtbar zu machen. Unter einer unabhängigen Schaltung sei in diesem Zusammenhang insbesondere zu verstehen, dass die Leuchtmittelanordnung 7 abweichend vom Betriebszustand der Lichtquelle 3 schaltbar ist. So kann es zweckmäßig sein, die Leuchtmittelanordnung 7 gerade dann einzuschalten, wenn die Lichtquelle 3 ausgeschaltet ist. Umgekehrt kann es zweckmäßig sein, die Leuchtmittelanordnung 7 mit Einschalten der Lichtquelle 3 auszuschalten. Eine entsprechend ausschließende Schaltung von Lichtquelle 3 und Leuchtmittelanordnung 7 kann vorgesehen sein, welche dafür sorgt, dass mit Einschalten einer der Beleuchtungen 3 bzw. 7 die jeweils andere 7 bzw. 3 ausgeschaltet wird.

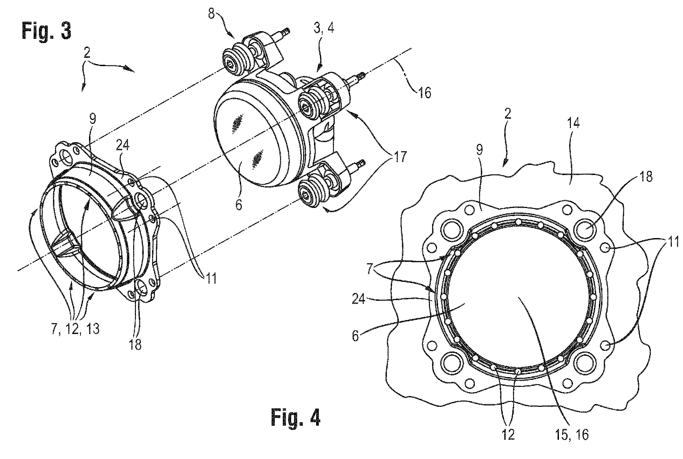

Der weitere mögliche Aufbau der Beleuchtungseinrichtung 2 sei nachfolgend anhand der Fig. 3 und 4 erläutert. Darin werden mit gleichen Bezugszeichen jeweils die gleichen Teile bezeichnet wie in den vorigen Figuren, weshalb auf eine wiederholte Erläuterung verzichtet wird, wenn sich daraus keine ergänzenden Wirkungen und Effekte ergeben.

In Fig. 3 ist eine Beleuchtungseinrichtung 2 in perspektivischer Explosionsansicht gezeigt. Es könnte sich dabei hinsichtlich grundsätzlichem Aufbau und Funktionsweise um eine wie in Fig. 2 erläuterte Beleuchtungseinrichtung 2 handeln. Aus der Darstellung geht insbesondere hervor, wie sich die Baugruppe 8, aufweisend Lichtquelle 3, Reflektor 4 und lichtdurchlässiges Element 6, entlang der zentralen Achse 16 in das Ringelement 9 fügen lässt, um so eine Verbindung zwischen Ringelement 9 und Baugruppe 8 herzustellen. Am Umfang der Baugruppe 8 sind vier Befestigungselemente 17 (in der Darstellung sind nur drei davon zu sehen, weil das vierte vom lichtdurchlässigen Element 6 verdeckt ist) angeordnet. Diese lassen sich in vier korrespondierend dazu angeordnete und komplementär dazu ausgebildete Ausnehmungen 18 des Ringelements 9 stecken und damit verrasten, um die Baugruppe 8 an dem Ringelement 9 zu befestigen. Auf diese Weise lässt sich die Baugruppe 8 mittels des Ringelements 9 mit geringem Montageaufwand an der Motorhaube 14 des Traktors 1 befestigen. Die Befestigungselemente 17 ermöglichen mittels integrierter Schraubenelemente eine genaue Lagejustierung der Baugruppe 8 gegenüber dem Ringelement 9, so dass sich der Winkel des von der Baugruppe 8 (Lichtquelle 3) abgestrahlten Lichts genau einstellen lässt.

In Fig. 4 ist die Beleuchtungseinrichtung 2 aus Fig. 3 in Ansicht von vorn im eingebauten Zustand an eine Motorhaube 14 gezeigt. Dazu ist die Motorhaube 14 nur ausschnittsweise darstellt. Von dem Ringelement 9 der Beleuchtungseinrichtung 2 wäre eigentlich nur ein mit der Leuchtmittelanordnung 7 versehener vorderer Bereich zu sehen. Da der Bereich der Abkantung 24 bei Ansicht des Traktors 1 von vorn hinter der Motorhaube 14 liegt, ist dieser von außen nicht zu sehen. Zum Zweck der besseren Verständlichkeit, ist die Motorhaube 14 hier jedoch als transparentes Element dargestellt. Das Ringelement 9 ist demnach im Bereich von acht über den Umfang verteilten Bohrungen 11 an der Motorhaube 14 befestigbar.

Weiterhin lässt sich der Fig. 4 entnehmen, dass die Leuchtmittelanordnung 7 im gezeigten Ausführungsbeispiel eine Vielzahl von Leuchtdioden 12 umfasst. Diese Leuchtdioden 12 sind mit einem gleichen Abstand zueinander an dem Ringelement 9 angeordnet. Die Anordnung bewirkt, dass für einen die Beleuchtungseinrichtung 2 aus einer relativen Ferne beobachtenden Betrachter aus der Gesamtheit der Leuchtdioden 12 der Eindruck eines geschlossenen Rings entsteht. Dieser Eindruck ist verständlicherweise umso stärker, je mehr Leuchtdioden 12 an dem Ringelement 9 angeordnet sind. Während im gezeigten Ausführungsbeispiel gemäß Fig. 4 Leuchtdioden 12 an dem Ringelement 9 angeordnet sind, ist es gleichermaßen denkbar, statt einzelner Leuchtdioden 12 einen länglichen Lichtleiter zu verwenden.

Neben einer die Baugruppe 8 tragenden Funktion und einer Beleuchtungsfunktion kommt dem Ringelement 9 zudem eine gestalterische Funktion zu. Wie insbesondere den Fig. 2 bis 4 zu entnehmen, ist nämlich das Ringelement 9 zumindest teilweise von außen sichtbar. Vorzugsweise weist das Ringelement 9 daher zumindest in diesem nach außen sichtbaren Bereich eine hochglänzende Oberfläche, insbesondere eine verchromte Oberfläche auf.

Durch die beschriebene Anordnung wird eine einfache und kostengünstige Möglichkeit geschaffen, den Traktor 1 mit einer weiteren Beleuchtung, insbesondere einem Tagfahrlicht auszustatten, ohne dass hierfür aufwendige Umgestaltungen erforderlich sind.

### Bezugszeichenliste

- 1: Traktor
- 2: Beleuchtungseinrichtung
- 3: Lichtquelle
- 4: Reflektor
- 5: Umgebung
- 6: lichtdurchlässiges Element
- 7: Leuchtmittelanordnung
- 8: Baugruppe
- 9: Ringelement
- 10: Strahlengang
- 11: Bohrung
- 12: Leuchtdiode
- 13: länglicher Lichtleiter
- 14: Motorhaube
- 15: Brennpunkt
- 16: zentrale Achse
- 17: Befestigungselement
- 18: Ausnehmung
- 19: Symmetrieebene
- 20: Fahrerkabine
- 21: Standlicht
- 22: Abblend- und Fernlicht
- 23: Arbeitslicht
- 24: Abkantung

## Patentansprüche

1. Landwirtschaftliches Fahrzeug (1) mit einer Beleuchtungseinrichtung (2), die eine Lichtquelle (3), die innerhalb eines Reflektors (4) angeordnet ist, um zumindest einen Teil des von der Lichtquelle (3) erzeugten Lichts gerichtet an eine Umgebung (5) des Fahrzeugs (1) abstrahlen zu können, und ein lichtdurchlässiges Element (6) zum Schutz der Lichtquelle (3) und des Reflektors (4) gegenüber der Umgebung (5) umfasst,
**gekennzeichnet durch** eine weitere der Beleuchtungseinrichtung (2) zugeordnete Leuchtmittelanordnung (7), die unabhängig von der Lichtquelle (3) schaltbar ist.

2. Fahrzeug nach Anspruch 1, **dadurch gekennzeichnet, dass** die Leuchtmittelanordnung (7) zur ungerichteten Abgabe von Licht an die Umgebung (5) des Fahrzeugs (1) ausgebildet ist.

3. Fahrzeug nach Anspruch 1 oder 2, **dadurch gekennzeichnet, dass** die Beleuchtungseinrichtung (2) frontseitig des Fahrzeugs (1) angeordnet ist, wobei die Leuchtmittelanordnung (7) insbesondere zur Beleuchtung und/oder Sichtbarmachung des Fahrzeugs (1) für entgegenkommende Verkehrsteilnehmer unter Tageslichtbedingungen dient.

4. Fahrzeug nach einem der vorigen Ansprüche, **dadurch gekennzeichnet, dass** die Lichtquelle (3) die Funktion eines Abblendlichts (22) und/oder eines Fernlichts (22) und/oder eines Arbeitslichts (23) und/oder eines Standlichts (21) des Fahrzeugs (1) erfüllt.

5. Fahrzeug nach einem der vorigen Ansprüche, **dadurch gekennzeichnet, dass** der Reflektor (4) die Form eines Hohlspiegels, insbesondere eines Parabolspiegels aufweist, wobei die Lichtquelle (3) in einem Brennpunkt (15) des Reflektors (4) angeordnet ist.

6. Fahrzeug nach einem der vorigen Ansprüche, **dadurch gekennzeichnet, dass** die Leuchtmittelanordnung (7) an einem Ringelement (9) angeordnet ist, das bezogen auf einen Strahlengang (10) des von der Lichtquelle (3) erzeugbaren Lichts etwa koaxial dazu positioniert ist.

7. Fahrzeug nach einem der vorigen Ansprüche, **dadurch gekennzeichnet, dass** die Leuchtmittelanordnung (7) eine Vielzahl von Einzelleuchtmitteln, insbesondere Leuchtdioden (12) umfasst, die insbesondere mit gleichem Abstand zueinander angeordnet sind, so dass für einen die Beleuchtungseinrichtung (2) aus einer relativen Ferne beobachtenden Betrachter aus der Gesamtheit der Einzelleuchtmittel (12) der Eindruck einer linienförmigen Struktur, insbesondere eines geschlossenen Rings entsteht.

8. Fahrzeug nach einem der vorigen Ansprüche, **dadurch gekennzeichnet, dass** die Leuchtmittelanordnung (7) einen länglichen Lichtleiter (13) umfasst, der so geformt, insbesondere gekrümmt ist, dass für einen die Beleuchtungseinrichtung (2) aus einer relativen Ferne beobachtenden Betrachter aus der Form des länglichen Lichtleiters (13) der Eindruck einer linienförmigen Struktur, insbesondere eines geschlossenen Rings entsteht.

9. Fahrzeug nach einem der Ansprüche 6 bis 8, **dadurch gekennzeichnet, dass** es sich bei dem Ringelement (9) um eine an der Karosserie des Fahrzeugs (1), insbesondere an einer Motorhaube (14) befestigbare Aufnahmeeinrichtung handelt, welche zur Aufnahme einer Baugruppe (8) der Beleuchtungseinrichtung (2) und/oder zur Aufnahme von einzelnen Komponenten der Beleuchtungseinrichtung (2) dient.

10. Fahrzeug nach einem der vorigen Ansprüche, **dadurch gekennzeichnet, dass** die Lichtquelle (3), der Reflektor (4) und das lichtdurchlässige Element (6) Teil einer Baugruppe (8) sind.

11. Fahrzeug nach Anspruch 9 oder 10, **dadurch gekennzeichnet, dass** sich die Baugruppe (8) entlang einer zentralen Achse (16) des Strahlengangs (10) in das Ringelement (9) fügen lässt.

12. Fahrzeug nach einem der Ansprüche 9 bis 11, **dadurch gekennzeichnet, dass** die Beleuchtungseinrichtung (2) mit Mitteln (17) versehen ist, um die Baugruppe (8) mit dem Ringelement (9) insbesondere lösbar zu verbinden.

13. Fahrzeug nach Anspruch 12, **dadurch gekennzeichnet, dass** die Mittel mehrere an Umfangsbereichen der Baugruppe (8) angeordnete Befestigungselemente (17) umfassen.

14. Fahrzeug nach Anspruch 12 oder 13, **dadurch gekennzeichnet, dass** an dem Ringelement (9) mehrere Ausnehmungen (18) vorgesehen sind, die zu den Befestigungselementen (17) der Baugruppe (8) korrespondierend angeordnet und komplementär dazu ausgebildet sind, um mit diesen eine Verbindung zwischen Ringelement (9) und Baugruppe (8) herstellen zu können.
